# EUROPÄISCHE PATENTANMELDUNG

(11) **EP 3 614 069 A1**
(43) Veröffentlichungstag der Anmeldung: **26.02.2020**
(21) Anmeldenummer: 18190739.5
(22) Anmeldetag: 24.08.2018
(51) Int. Cl.: F24T 10/17

(54) **Verfahren und Einrichtung zur Gewinnung von Nutzenenergie aus Erdwärme**

(71) Anmelder: ClimaSolutions GmbH, 23623 Ahrensbök (DE)
(72) Erfinder:
(74) Vertreter: Raffay & Fleck

(57) **Zusammenfassung**

Es wird ein Verfahren zur Gewinnung von Nutzenergie aus Erdwärme vorgeschlagen, bei dem in einem in eine Tiefbohrung in die Erde eingebrachtes, ein Außenrohr (2) und ein Innenrohr (3) aufweisendes Koaxialrohr (3), bei dem in einem in der Tiefbohrung versenkten Endabschnitt (4) des Koaxialrohrs (1) Au-ßenrohr (2) und Innenrohr (3) eine Verbindung miteinander aufweisen, ein bei Standardbedingungen flüssiges Wärmemedium (8) in das Außenrohr (2) eingebracht wird und in Richtung des in der Tiefbohrung versenkten Endabschnitts (4) des Koaxialrohrs (1) strömt, wobei das Wärmemedium (8) unter Aufnahme von Erdwärme erwärmt wird und im Bereich des Endabschnitts (4) einen Phasenübergang durchläuft und gasförmig in das Innenrohr (3) übertritt und darin bis zu einem an der Erdoberfläche gelegenen, oberen Ende des Koaxialrohrs aufwärts strömt, und wobei mit dem strömenden, gasförmigen Wärmemedium (8) ein Strömungsgenerator (14) zur Erzeugung elektrischer Energie betrieben wird.

## Beschreibung

Die vorliegende Erfindung betrifft ein Verfahren und eine Einrichtung zur Gewinnung von Nutzenergie aus Erdwärme.

Die Nutzung von Erdwärme zur Energiegewinnung ist seit langem bekannt. So wurde das erste für die Gewinnung von elektrischer Energie genutzte Geothermiekraftwerk schon zu Beginn des 20. Jahrhunderts in Betrieb genommen. Auch aktuell gibt es, nicht zuletzt vor dem Hintergrund einer Suche nach klimaneutralen und CO₂-emissionsfreien Formen der Energiegewinnung, Bestrebungen, Erdwärme in geothermischen Anwendungen für die Energiegewinnung besser und umfangreicher nutzbar zu machen.

Insbesondere gibt es geothermische Einrichtungen und Verfahren zur Wärme- und/oder Elektroenergieerzeugung mittels Oberflächengeothermie (in Tiefen bis 400m) oder Tiefengeothermie (in Tiefen von mehr als 400m). Bei den bekannten Verfahren wird Wasser bis in große Tiefen geothermisch erwärmt. Das erwärmte Wasser, auch Thermalwasser genannt, wird zur Erdoberfläche transportiert und die von dem Wasser aufgenommene Erdwärme sodann für die Gewinnung von Nutzenergie verwertet.

Bei der Tiefengeothermie unterscheidet man zwischen hydrothermalen und petrothermalen Systemen. Bei den hydrothermalen Systemen wird in tief gelegenen Schichten gespeichertes Wasser angezapft und an die Oberfläche gefördert und wird dessen gespeicherte Wärme zur Energiegewinnung genutzt. Bei den petrothermalen Systemen wird in Tiefengestein gespeicherte Erdwärme mit dorthin gefördertem und mit dem Tiefengestein in Wärmeaustauch gebrachten Wasser aufgenommen und das so erwärmte Wasser an die Oberfläche gefördert für die Energiegewinnung dort. Bei den hydrothermalen Systemen werden also offene Systeme gebildet, bei denen in der Tiefe dort befindliche Materie (Wasser) entnommen und im Austausch in der Regel ein Ersatz von der Erdoberfläche dorthin geleitet und abgelagert wird. Es kann auch das in der Tiefe entnommene Wasser rückgeführt werden. Es besteht hierbei also insbesondere das Risiko eines Eintrages von Kontaminationen in das Tiefenwasser. Petrothermale Systeme können auch mit Erdwärmesonden realisiert werden, in denen das Wasser in einem geschlossenen Kreislauf geführt wird, die im Tiefengestein gespeicherte Erdwärme durch eine Wand der Erdwärmesonde hindurch aufnehmen.

Neben dem Problem, dass bei hydrothermalen Systemen gegeben ist, nämlich dem möglichen Eintrag vom Verunreinigungen und Kontaminationen in das tief gelegenen Reservoir des Thermalwassers, besteht bei den bekannten Systemen weiterhin der Nachteil, dass insbesondere für die Erzeugung elektrischer Energie in der Regel nur ein geringer Wirkungsgrad erzielt werden kann. Für die Nutzung des bei den bekannten Systemen als Wärmemedium eingesetzten Wassers zum Antrieb einer elektrischen Generatormaschine muss das Wasser mit einer Temperatur von wenigstens 80°C an die Oberfläche gelangen. Direkt kann das Wasser für den Antrieb zum Beispiel einer Dampfturbine nur genutzt werden, wenn es an der Oberfläche dampfförmig austritt. Dies kann entweder nur mit sehr tief geführten Bohrungen erreicht werden (im Durchschnitt steigt die Temperatur mit 100 m Tiefe um 3°C, sodass Temperaturen von 100°C in normalen Lagen nur in sehr großen Tiefen angetroffen werden) oder mit Bohrungen im Bereich besonderer Lagen, in denen auch schon in geringeren Tiefen besonders hohe Temperaturen anzutreffen sind, zum Beispiel aufgrund von vulkanischen Aktivitäten oder besonderen Anomalien des Erdmagnetismus.

Hier soll mit der Erfindung Abhilfe geschaffen und ein Verfahren sowie eine Einrichtung angegeben werden, mit dem bzw. mit der auch in normalen Lagen und geringerer Bohrtiefe geothermisch elektrische Energie erzeugt werden kann.

Gelöst wird diese Aufgabe und erreicht wird das gesteckte Ziel zunächst einmal durch ein Verfahren zur Gewinnung von Nutzenergie aus Erdwärme mit den Merkmalen des Anspruchs 1. Vorteilhafte Weiterbildungen eines erfindungsgemäßen Verfahrens sind in den Ansprüchen 2 bis 8 angegeben. Mit der Erfindung wird weiterhin als Lösung der vorstehenden Aufgabe eine Einrichtung zur Gewinnung von Nutzenergie aus Erdwärme mit den Merkmalen des Anspruchs 9 vorgeschlagen. Vorteilhafte Weiterbildungen einer erfindungsgemäßen Einrichtung sind in den Ansprüchen 10 bis 15 bezeichnet.

Bei dem erfindungsgemäßen Verfahren wird in eine Tiefbohrung ein Koaxialrohr in die Erde eingebracht und eingesetzt. Das Einbringen der Tiefbohrung und das Einsetzen des Koaxialrohrs in die Tiefbohrung können dem Verfahren zugerechnete Schritte sein. Das Verfahren kann aber auch ohne diese Schritte durchgeführt werden, d. h. im Nachgang zu und losgelöst von einem gesondert vorgenommenen Einbringen der Bohrung und Einsetzen des Koaxialrohrs. Das Koaxialrohr weist ein Außenrohr und ein Innenrohr auf und ist mit einem Endabschnitt in der Tiefbohrung versenkt, reicht typischerweise mit diesem Endabschnitt bis an den Grund der Tiefbohrung. Im Bereich dieses Endabschnitts sind das Außenrohr und das Innenrohr des Koaxialrohrs mit einander strömungstechnisch verbunden, d.h. es kann dort ein in dem Außenrohr geführtes Medium in das Innenrohr übertreten. Bei der Durchführung des Verfahrens wird nun ein bei Standardbedingungen (SATP Bedingungen) flüssiges Wärmemedium in das Außenrohr eingebracht und strömt in Richtung des in der Tiefbohrung versenkten Endabschnitts des Koaxialrohrs. Die Standardbedingungen sind von der International Union of Pure and Applied Chemistry (IUPAC) bestimmt als eine Temperatur von 25°C und zugleich einem Druck von 1000 mbar. Dieser Druck von 1000 mbar wird in dieser Anmeldung nachstehend auch als Normaldruck bezeichnet.

Das Wärmemedium strömt dann in Richtung des Endabschnitts des Koaxialrohrs, was insbesondere ausschließlich schwerkraftgetrieben erfolgen kann. Dabei nimmt das Wärmemedium Erdwärme auf und wird dadurch erwärmt. Eine zusätzliche Erwärmung kann dabei auch durch Reibung des an einer Wandung des Außenrohres entlang strömenden Wärmemediums erfolgen. Die wesentliche Wärmeaufnahme wird allerdings durch die Erdwärme bewerkstelligt. In einem im letzten Drittel des Koaxialrohrs gelegenen Abschnitt des Koaxialrohrs erfolgt dann ein Phasenübergang des Wärmemediums, welches in diesem Bereich in die Gasphase übertritt und im Bereich des Endabschnitts gasförmig in das Innenrohr eintritt. In dem Innenrohr steigt das nun gasförmige Wärmemedium auf und strömt aufwärts. Das strömende, gasförmige Wärmemedium wird dann zu einem Strömungsgenerator geführt, der angetrieben durch diesen Gasstrom zur Erzeugung elektrischer Energie betrieben wird.

Das Wärmemedium ist insbesondere nicht Wasser, sondern ein Wärmemedium, welches einen bei Normaldruck deutlich niedriger liegenden Siedepunkt hat. Der Siedepunkt des Wärmemediums bei Normaldruck kann dabei insbesondere in einem Bereich zwischen 30 °C und 60 °C liegen. Für das Aufsteigen des Wärmemediums in dem Innenrohr kann ein Kamineffekt genutzt werden. Dies kann insbesondere dadurch geschehen, dass das Innenrohr im Bereich eines Austritts an oder im Bereich der Erdoberfläche eine Durchmessererweiterung aufweist, durch die an dieser Stelle eine Entspannung und Verringerung der Temperatur des ausströmenden Gases im Vergleich zu einer Temperatur des im Bereich des Endabschnitts, insbesondere an einem unteren Ende des Innenrohrs, befindlichen gasförmigen Wärmemediums erreicht wird.

Bei dem erfindungsgemäßen Verfahren wird also nicht vorrangig eine in dem Wärmemedium aufgenommene und gespeicherte Wärmeenergie genutzt, sondern eine beim Aufsteigen des gasförmigen Wärmemediums in dem Innenrohr erhaltene kinetische Energie des Gasstroms, der zum Antreiben des Strömungsgenerators verwendet wird. Bei geeigneter Auslegung der Verfahrensparameter können hier erhebliche Strömungsgeschwindigkeiten, Geschwindigkeiten von deutlich über 200 km/h, erhalten werden, mit denen entsprechend ausgelegte, in Abmessungen sehr klein dimensionierbare Strömungsgeneratoren angetrieben werden können. Insbesondere ist es auch möglich, den Gasstrom in verschiedene Teilströme aufzuteilen, um damit mehr als einen Strömungsgenerator parallel zu betreiben und die erhaltene elektrische Leistung zu erhöhen.

Für eine weitere Nutzung der von dem strömenden gasförmigen Wärmemedium mitgeführten, insbesondere von der Erdwärme aufgenommenen, Energie kann vorgesehen sein, dass das Wärmemedium nach dem Durchströmen des Strömungsgenerators auch noch durch einen Wärmeübertrager geführt wird, um so nutzbare Wärmeenergie zu gewinnen. Durch eine solche Kombination erhöht sich der Gesamtwirkungsgrad des Verfahrens.

Mit Vorteil kann das Wärmemedium nach dem Durchströmen des Strömungsgenerators (und nach einem eventuellen Durchströmen des Wärmeübertragers) verflüssigt und in flüssiger Form erneut in das Außenrohr des Koaxialrohrs eingebracht werden. Bei dieser Variante wird das Verfahren mit einem in einem geschlossenen Kreislauf geführten Wärmemedium betrieben, sodass nicht etwa ständig neues Wärmemedium zugeführt werden muss.

Mit Vorteil kann das Wärmemedium in dem Außenrohr auf einer spiralförmigen Bahn in Richtung des in der Tiefbohrung versenkten Endabschnitts geführt werden. Dies kann zum Beispiel geschehen, indem in dem Außenrohr entsprechende Leitstrukturen vorgesehen sind, zum Beispiel in Spiralform geführte, beispielsweise an einer Außenwand des Innenrohrs montierte, zum Beispiel angeschweißte, Leitbleche. Die Führung des Wärmemediums in einer solchen Spiralform hat verschiedene Vorteile. So wird das in seinem Fall in Richtung des Endabschnitts beschleunigte Wärmemedium durch eine spiralförmige Bahn in dem Außenrohr nach außen, in Richtung der Außenwand gedrückt, sodass es dort in besonders gutem Kontakt mit der Außenwand steht und effektiv die darüber eintretende Erdwärme aufnehmen kann. Zudem entsteht bei einer solchen Führung zwischen der Wand des Außenrohrs und dem Wärmemedium Reibung, die zu einer zusätzlichen Erwärmung des Wärmemediums führen und damit zu einem Wärmeeintrag beitragen kann. Entsprechende Leitstrukturen, die das Außenrohr des Koaxialrohrs gleichermaßen in einzelne Höhenabschnitte unterteilen, verhindern auch, dass - jedenfalls im dynamischen Fall, in dem das Wärmemedium nicht in dem Außenrohr steht, sondern in entsprechenden Kompartimenten bzw. Abschnitten strömt, ohne dass das Außenrohr vollständig gefüllt ist - im Endabschnitt des Koaxialrohr ein hoher Staudruck herrscht, der auch bei den durch die aufgenommene Wärme erreichten Temperaturen des Wärmemediums, die über dem Siedepunkt des Wärmemediums bei Standardbedingungen liegen, einen Phasenübergang in die Gasphase des Wärmemediums verhindern könnte.

Die Tiefe der Tiefbohrung beträgt insbesondere wenigstens 1000 m, mit Vorteil wenigstens 1300, insbesondere wenigstens 1500, kann weiterhin insbesondere bei einer Höchsttiefe von 2500 m, insbesondere von 2000 m begrenzt sein. In entsprechender Tiefe herrschen bei üblichen geologischen Lagen Temperaturen von ca. 48°C bis 78°C (wenn man von der Faustformel einer Erwärmung von 3°C pro 100 m und für die ersten 100 m von 6°C ausgeht). Wie eingangs erwähnt genügen diese Temperaturen noch nicht, um mit dem in üblichen Verfahren verwendeten Wasser einen elektrischen Generator zu betreiben. Mit einem geeigneten Wärmemedium, dass bei Standardbedingungen eine Siedetemperatur im Bereich zwischen 30 °C und 60 °C aufweist, kann der oben beschriebene Effekt erreicht und kann das vorstehend beschriebene Verfahren betrieben werden. Als Wärmemedium kann insbesondere Dodecafluor-2-methylpentan-3-1 verwendet werden. Hierbei handelt es sich um eine bei Standardbedingungen farb- und geruchslose Flüssigkeit, die beispielsweise von der Firma 3M unter der Handelsbezeichnung Novec® angeboten wird, zum Beispiel als Novec® 649.

Eine erfindungsgemäße Einrichtung zur Gewinnung von Energie aus Erdwärme weist folgende Elemente auf:
- ein in eine Tiefbohrung eingebrachtes Koaxialrohr. Dieses Koaxialrohr weist eine Außenrohr und ein Innenrohr auf, wobei in einem in der Tiefbohrung versenkten Endabschnitt des Koaxialrohrs Außenrohr und Innenrohr eine Verbindung zueinander haben. Das Koaxialrohr ist typischerweise mit dem Endabschnitt bis zu einem Grund der Tiefbohrung geführt.
- in dem Außenrohr angeordnete, dessen Querschnitt durchragende Leitstrukturen, insbesondere Spiralleitbleche;
- eine mit einer Eintrittsöffnung des Außenrohrs, die an einem dem Endabschnitt axial gegenüberliegenden Ende des Koaxialrohrs vorgesehen ist, verbundene Zuleitung;
- einen mit einer Austrittsöffnung des Innenrohrs, die an dem Ende des Koaxialrohrs vorgesehen ist, verbundenen Gasströmungskanal;
- einen in dem Gasströmungskanal angeordneten Strömungsgenerator zum Erzeugen von elektrischer Energie. Der Strömungsgenerator ist dabei in einer solchen Weise in dem Gasströmungskanal angeordnet, dass ein Rotor des Generators durch anströmendes Gas bewegt wird zum Antreiben des Generators;
- ein zum Durchströmen des Koaxialrohrs angeordnetes Wärmemedium, welches bei Standardbedingungen flüssig ist und einen Siedepunkt bei Normaldruck (also 1000 mbar) von zwischen 30 °C und 60 °C aufweist.

Mit dieser erfindungsgemäßen Einrichtung kann ein wie vorstehend beschriebenes Verfahren durchgeführt werden.

Bei der Einrichtung kann insbesondere ein an dem Ende des Koaxialrohrs angeordneter Abschnitt des Innenrohrs eine Durchmesseraufweitung aufweisen. Dort wird dann ein Durchmesser des Innenrohrs ausgehend von einem ersten Durchmesser, den das Innenrohr entlang seiner Erstreckung bis zu dem Endabschnitt aufweist, bis auf einen zweiten Durchmesser erweitert, den die Austrittsöffnung aufweist. Durch diese Maßnahme wird ein beim Betrieb der Einrichtung angestrebter Kamineffekt in dem Innenrohr verstärkt, durch den dort aufwärts strömendes, gasförmiges Wärmemedium nach oben, in Richtung des an der Erdoberfläche befindlichen Endes des Koaxialrohrs gezogen wird.

Die Einrichtung kann weiterhin zusätzlich einen Wärmeübertrager aufweisen, der jenseits des Strömungsgenerators angeordnet ist, also auf der Seite, die dem die Austrittsöffnung mit dem Strömungsgenerator verbindenden Strömungskanal entgegengesetzt liegt. Mit einem solchen Wärmeübertrager kann dann nutzbare Wärmeenergie gewonnen werden.

Mit Vorteil sind in der Einrichtung die Austrittsöffnung und die Eintrittsöffnung in einem geschlossenen Leitungssystem miteinander verbunden, sodass ein insgesamt geschlossener Kreislauf erhalten ist, in dem das Wärmemedium zirkulieren kann. In einem solchen geschlossenen Kreislauf kann insbesondere ein Entgasungs- und Vorratsbehälter angeordnet sein, in den durch den Strömungsgenerator geströmtes Wärmemedium nach einer Verflüssigung, die durch Entspannung und Abkühlung erfolgen kann, einströmt, dort entgasen kann und aus dem so verflüssigtes Wärmemedium wieder in Richtung der Eintrittsöffnung des Außenrohrs befördert und dort wieder in den Kreislauf eingebracht werden kann.

Mit Vorteil können in der Einrichtung auch ein oder mehrere Ventil(e) vorgesehen sein, die insbesondere in der Zuleitung und/oder dem Gasströmungskanal zum gezielten Öffnen und/oder Verschließen der Zuleitung und/oder des Gasströmungskanals angeordnet sein können und die mit einer Steuerung zum automatischen Betätigen des wenigstens einen Ventils verbunden sind. Über solche Ventile, bei denen es sich auch um Durchflussregelventile zum gezielten Einstellen einer Durchflussmenge handeln kann, kann eine Steuerung der Einrichtung vorgenommen werden. Für den Betrieb der Einrichtung ist es nämlich wesentlich, dass das Wärmemedium das Koaxialrohr in einem dynamischen Prozess durchströmt. Es muss dabei insbesondere immer nur so viel flüssiges Wärmemedium nachgeführt werden, wie in dem Endabschnitt des Koaxialrohrs verdampft und durch das Innenrohr aufsteigt. Wird hier zu viel Wärmemedium nachgeführt, so besteht die Gefahr, dass das gesamte Außenrohr mit (noch flüssigem) Wärmemedium befüllt wird und durch den dann entstehenden hydrostatischen Druck der Prozess des Phasenübergangs im Endabschnitt des Koaxialrohrs unterbunden wird, das System zum Stillstand gelangt. Entsprechend muss also über eine Steuerung dafür Sorge getragen werden, dass der dynamische Vorgang aufrechterhalten bleibt. Um diesen Prozess zu überwachen und steuern zu können, können auch ansprechende Sensoren vorgesehen sein, die Kennwerte des Verfahrens, wie zum Beispiel Druck und Temperatur des ausströmenden gasförmigen Wärmemediums oder einen Volumenstrom des Wärmemediums erfassen und als Eingangsgrößen für die Prozessführung der Steuerung zur Verfügung stellen.

Das in der Erfindung gemessen Einrichtung eingesetzte Wärmemedium kann insbesondere Dodecafluor-2-methylpentan-3-1 sein.

Weitere Vorteile und Merkmale der Erfindung ergeben sich aus der nachstehenden Beschreibung eines Ausführungsbeispiels anhand der beigefügten Figur.

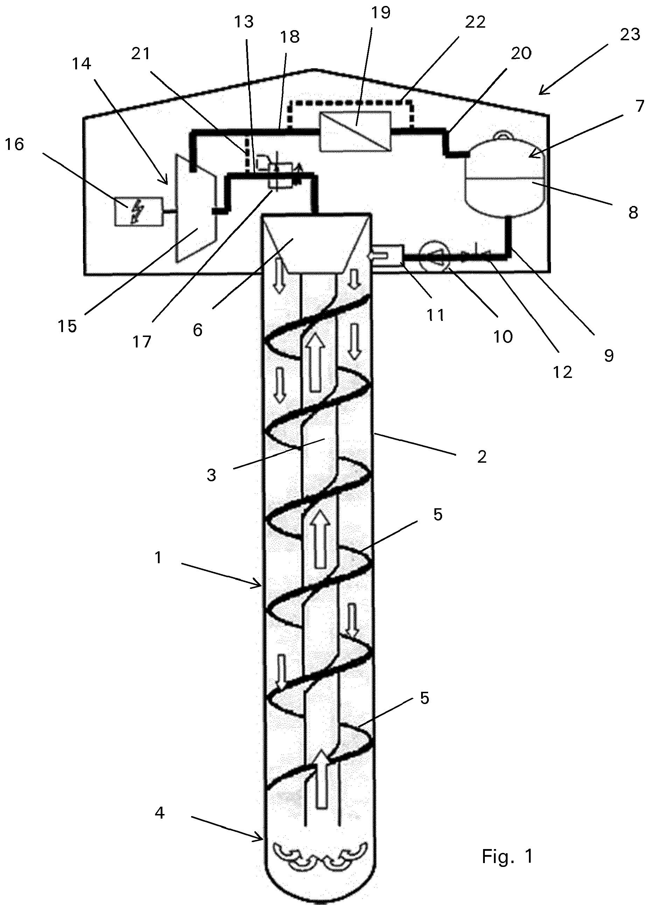

- Fig. 1: zeigt eine schematische Skizze einer erfindungsgemäßen Einrichtung und illustriert das erfindungsgemäße Verfahren in einer möglichen Ausgestaltung.

In der einzigen Figur 1 ist - sehr schematisch - eine Skizze einer möglichen Ausgestaltung der Erfindung gezeigt, die auch das erfindungsgemäße Verfahren schematisch erläutert.

In ein Bohrloch einer Tiefbohrung (hier nicht näher gezeigt) ist ein Koaxialrohr 1 eingebracht. Dieses ist an einem in das Bohrloch eingesetzten Ende geschlossen und besteht aus einem Außenrohr 2 und einem Innenrohr 3. Das Innenrohr 3 ist dabei kürzer als das Außenrohr 2, so dass in einem Endabschnitt 4 das Außenrohr 2 mit dem Innenrohr 3 verbunden ist.

Die Tiefe der Bohrung, in die das Koaxialrohr 1 eingesetzt ist, und damit auch die Länge des Koaxialrohrs 1, kann insbesondere zwischen 1000 m und 2500 m betragen, liegt im gezeigten Ausführungsbeispiel insbesondere bei ca. 1600 m.

Das Außenrohr 2 kann bis zu einer Tiefe von ca. 1.000 m thermisch gegenüber dem Innenrohr 3 isoliert sein. An dem Innenrohr 2 sind Leitbleche 5 (die als ein durchgehendes Leitblech geformt sein können) festgelegt, die sich in den Durchgang des Außenrohrs 2 hinein und bis zu dessen Außenwand erstrecken und sich spiral- bzw. schneckenförmig in Richtung des Endabschnitts 4 winden.

Das Innenrohr 3 mündet an dem dem in das Bohrloch abgesenkten Ende gegenüberliegenden Ende des Koaxialrohrs 1 mit einer Aufweitung 6.

In einem Entgasungs- und Vorratsbehälter 7 ist ein Wärmemedium 8 bevorratet, das unter Standardbedingungen flüssig ist. Es liegt in dem Entgasungs- und Vorratsbehälter 7 in flüssiger Phase vor. Durch eine Leitung 9 wird mittels einer Pumpe 10 und über einen Einlass 11 wird kontinuierlich flüssiges Wärmemedium 8 in das Außenrohr eingeleitet. Bei dem Wärmemedium kann es sich insbesondere um Dodecafluor-2-methylpentan-3-1 handeln, zum Beispiel das von der Firma 3M unter der Marke Novec® 649. Dieses Wärmemedium hat z.B. einen Siedepunkt bei Standardbedingungen von 49°C. In der Leitung 9 ist ein Ventil 11 vorgesehen, mit dem die Leitung 9 verschlossen und mit dem weiterhin die Durchflussrate des Wärmemediums 8 durch die Leitung 9 kontrolliert werden kann.

Durch die Windungen der Leitbleche 5, die an die Außenwand des Innenrohres 3 z.B. angeschweißt sein können, strömt das Wärmemedium 8 in einer rotierenden Bewegung in dem Außenrohr 2 abwärts in Richtung des Endabschnitts 4. Durch die zunehmende Geschwindigkeit, mit der das Wärmemedium 8 abwärts strömt und durch die wirkende Zentralkraft wird das Wärmemedium 8, je weiter es in die Tiefe gelangt, mit umso größerer Kraft an die Außenwand des Außenrohres 2 gepresst. Dabei nimmt das Wärmemedium 8 geothermische Wärmeenergie auf, wobei dies durch die Anpressung des Wärmemediums 8 an die Außenwand des Außenrohrs 2 besonders effektiv geschieht. Zusätzlich entsteht weitere Wärme durch die Reibung des Wärmemediums 8 an der Innenseite der Außenwand des Außenrohrs 2, was die Temperatur des Wärmemediums 8 zusätzlich steigen lässt.

Die in spiralförmigen Windungen geführten Leitbleche 5 sind bis zu einem Punkt vorgesehen, an dem eine Phasenübergangsschwelle beginnt. Dies ist ein Punkt in der Tiefe der Bohrung, an dem das Wärmemedium 8 sich durch die wie oben geschilderte Aufnahme von Wärme bis zum Siedepunkt erwärmt hat und nun gasförmig wird. Der unterste Abschnitt des Innenrohrs 3, z.B. die letzten 100 m, ist thermisch nicht zum Außenrohr 2 isoliert, so dass die Leitbleche5 in diesem Bereich zusätzlich Wärmeübertragungsflächen darstellen. Da im Innenrohr 3 das heiße gasförmige Wärmemedium 8 nach oben aufsteigt, erwärmt sich auch das Innenrohr 3 und die Leitbleche 5, die damit Wärmeenergie mit abgeben können. Erreicht das Wärmemedium 8 den thermalen Temperaturbereich bzw. die Phasenübergangsschwelle, beginnt das Wärmemedium 8, wie erwähnt, zu verdampfen. Durch das ständige Nachführen von Wärmemedium 8 in das Außenrohr 2 des Koaxialrohrs 1, wird immer mehr Wärmemedium 8 den Phasenwechsel realisieren. Dadurch kann das im Endabschnitt 4 dann gasförmig vorliegende Wärmemedium 8 nicht im Außenrohr 2 nach oben aufsteigen. Auch die Leitbleche lassen ein Aufsteigen des gasförmigen Wärmemediums 8 nicht zu. Das gasförmige Wärmemedium 8 steigt daher im Innenrohr 3, getrieben insbesondere durch einen aufgrund eines einsetzenden Kamineffekts entstehenden Unterdruck, aufwärts in Richtung des oberen Endes des Koaxialrohrs 1. Dort wird es im Bereich der Aufweitung entspannt und abgekühlt. Für die Temperaturreduzierung des Wärmemediums 8 werden also kein technisches Hilfsmittel und kein Energieeinsatz benötigt, wodurch ansonsten der Gesamtwirkungsgrad des Verfahrens verschlechtert würde.

Durch die Aufweitung des Rohrdurchmessers wird die Temperaturdifferenz zwischen dem in dem Bohrloch versenkten unteren Ende des Koaxialrohrs 1 und dem höchsten Punkt des Innenrohrs 3, in dem das gasförmige Wärmemedium 8 strömt, größer. Dies steigert noch einmal den Kamineffekt, der ein beschleunigtes Aufsteigen des gasförmigen Wärmemediums 8 im Innern des Innenrohrs 3 antreibt. Hierdurch erhält das schnell aufwärts strömende gasförmige Wärmemedium 8 eine hohe kinetische Energie. Die Entspannung und Temperaturreduzierung des gasförmigen Wärmemediums 8 in der Aufweitung ist - durch entsprechende Auslegung der geometrischen Verhältnisse - mit Vorteil begrenzt auf 5K über dem Siedepunkt des Wärmemediums 8, so dass dieses auch nach dem Entspannen weiterhin gasförmig ist und kein Phasenwechsel zurück in die flüssige Phase erfolgt, bis die kinetische Energie des Wärmemediums 8 genutzt wurde.

Die Strömungsgeschwindigkeit mit der das gasförmige Wärmemedium 8 aufwärts strömt, und damit seine kinetische Energie (Masse x Geschwindigkeit), des gasförmigen Wärmemediums 8 , ist abhängig von der Tiefe der Bohrung, von der Temperatur des gasförmigen Wärmemediums 8, seiner Dichte und dem Temperaturunterschied zwischen dem unteren Ende des Koaxialrohrs 1 und dem höchsten Punkt des Innenrohrs 3, in dem das gasförmige Wärmemedium 8 strömt.

Das gasförmige Wärmemedium 8 wird im Bereich der Aufweitung in einem Auslass aus dem Innenrohr 3 in eine Leitung 13 überführt und durch diese oberirdisch zu einem Strömungsgenerator 14, die ähnlich einer Windturbine arbeitet, geleitet. Der Strömungsgenerator 14 setzt sich zusammen aus einer Strömungsturbine 15, die von dem gasförmigen Wärmemedium 8 angeströmt und in Rotation versetzt wird, und einem mit der Strömungsturbine 15 direkt gekoppelten und von dieser angetriebenen Generator 16 zur Erzeugung elektrischer Energie.

Ein Ventil 17 in der Leitung 13 kann dazu verwendet werden, die Leitung 13 zu sperren und selektiv zu öffnen und ggf. auch eine Durchflussrate durch die Leitung 13 einzustellen. Für das Anfahren des Systems wird das Ventil 17 geschlossen, so dass durch das stetig nachgefüllte und verdampfende Wärmemedium 8, das in dem Innenrohr 3 aufsteigt, der Druck- und die Temperatur innerhalb des Koaxialrohrs 1 stetig steigen bis auf für den kontinuierlichen Betrieb der Einrichtung erforderliche Wert. Ist die erforderliche Temperatur und ist der Druck erreicht, öffnet eine Steuerung das Ventil 17 automatisch. Die Temperatur und der Druck werden durch das ständige Nachführen des flüssigen Wärmemediums 8, mittels der Pumpe 10 aufrechterhalten, da das nachgeführte Wärmemedium 8 ständig in dem Bereich der Phasenübergangsschwelle den Phasenwechsel vollzieht und so gasförmiges Wärmemedium 8 nachliefert. Dieses Verfahren ist vergleichbar mit der Arbeitsweise eines Dampfkessels mit ständig nachfließendem Speisewasser.

Nach Durchströmen der Strömungsturbine 15 wird es in der Leitung 18 weiter geführt zu einem optional vorhandenen Wärmeübertrager 19. Dort kann dem gasförmigen Wärmemedium 8 die noch enthaltene Wärmeenergie entzogen werden. Diese Wärmeenergie kann zum Beispiel dann für die Fernwärme-oder für Produktionswärmeversorgung genutzt werden. Über eine weitere Leitung 20 strömt das abgekühlte, noch gasförmige Wärmemedium 8 zurück in den Entgasungs- und Vorratsbehälter 7. Dort vollzieht es den Phasenwechsel von gasförmig zu flüssig. Der Entgasungs- und Vorratsbehälter 7 kann z.B. mit Außenluft gekühlt werden. Er dient dem Phasenwechsel des Wärmemediums 8 und dient gleichzeitig als Vorratsbehälter für die Zuführung des Wärmemediums 8 in das Außenrohr 2 des Koaxialrohrs 1. Damit ist der Kreislauf geschlossen.

Wenn keine Elektroenergie erzeugt werden soll, kann bereits über eine gestrichelt gezeichnete und mit nicht näher dargestellten Ventilen schaltbare Kurzschlussleitung 21 die Strömungsturbine 15 und damit der Strömungsgenerator 14 umgangen werden. In ähnlicher Weise kann eine ebenfalls gestrichelt dargestellte Kurzschlussleitung 22 mittels nicht näher dargestellter Ventile aktiviert werden, wenn keine Wärmeenergie gewünscht ist. Dann wird das Wärmemedium 8 unter Umgehung des Wärmeübertragers 18 direkt von der Strömungsturbine 15 in den Entgasungs- und Vorratsbehälter 8 geleitet.

Mit 23 ist ein Installationsgebäude angedeutet, in dem die technischen Einrichtungen aufgenommen sind. Der Erfinder hat dabei errechnet, dass nur etwa 25 m² Grundfläche für die Unterbringung der für die Einrichtung erforderlichen technischen Einrichtungen benötigt werden, um eine Anlage mit einer Nennleistung von etwa 2,5 MW zu realisieren. Ein weiterer Vorteil liegt in der vergleichsweise hohen Dichte, mit der erfindungsgemäße Anlagen in der Fläche umgesetzt werden können. Der Erfinder hat hier errechnet, dass eine Dichte von 4 Anlagen pro km² möglich ist. Dies ist deutlich mehr als im Falle von herkömmlichen Geothermieanlagen, die einen weiter größeren Einzugsbereich zu den Seiten haben.

Besondere Merkmale und Vorteile des erfindungsgemäßen Verfahrens und einer dieses Verfahren umsetzenden Einrichtung sind:
- Es wird ein Koaxialrohr in die Tiefe eingebracht.
- In ein Außenrohr, des Koaxialrohres wird ein flüssiges Wärmemedium eingebracht (z.B. dort hinein gepumpt), welches Wärmemedium - bei Normaldruck von 1000 mbar - bei einer geringen Temperatur (insbesondere zwischen 40°C und 60°C) verdampft, so dass der Phasenübergang schon in vergleichsweise geringer Tiefe, z.B. ab einer Tiefe von 1300 bis 1400 m, in dem Koaxialrohr eintritt.
- An eine Außenwand eines Innenrohres des Koaxialrohrs können bis zu der Tiefe, in der der Phasenübergang eintritt (Phasenübergangsschwelle) spiralförmige Leitbleche festgelegt, insbesondere angeschweißt sein (vergleichbar mit einer senkrechten Rohrschnecke). Die Steilheit der Windungen beeinflusst dabei die zeitliche Dauer, bis das Wärmemedium die Phasenübergangsschwelle erreicht.
- Sind Leitbleche vorgesehen wirkt auf das flüssige Wärmemedium eine Zentralkraft (Fliehkraft), so dass das Wärmemedium beim abwärts Strömen an eine Innenseite des Außenrohrs gepresst wird und so Reibungswärme entsteht.
- Das Innenrohr kann gegenüber dem Außenrohr thermisch isoliert sein, um einen Wärmeübergang von dem in dem Innenrohr geführten gasförmigen Wärmemedium auf das in dem Außenrohr nachströmende flüssige Wärmemedium zu verhindern, jedenfalls zu verringern. Es kann diese Isolierung in einem untersten Abschnitt des Koaxialrohrs, z.B. in den untersten 100 m fortgelassen werden, so dass die Wärmeenergie aus der Tiefe auf die Windungen der Leitbleche übertragen wird und diese Windungen eine zusätzliche Wärmeübertragungsfläche darstellen.
- Das flüssige Wärmemedium erreicht bei der Siedetemperatur, die durch die geothermische Energie in einer bestimmten Bohrtiefe zur Verfügung steht, die Phasenübergangsschwelle.
- Das Wärmemedium wird gasförmig und will, auf Grund der geringeren Dichte, im Außenrohr nach oben steigen. Doch auf Grund des ständigen Nachführens des flüssigen Wärmemediums sowie durch die Windungen der Leitbleche, wird dies verhindert.
- Durch das kontinuierliche Nachführen des flüssigen Wärmemediums in das Außenrohr entsteht ständig neues gasförmiges Wärmemedium im Bereich des Endabschnitts. Das gasförmige Wärmemedium füllt den Raum zwischen dem Bereich, in dem die Phasenübergangsschwelle liegt und einem untersten Ende des Koaxialrohres im Außenrohr und bis zur Absperreinheit des Innenrohres aus.
- Nach einer bestimmten Zeitdauer, die steuerbar ist (z.B. über die Füllmenge des Wärmemediums), steigen der Druck und die Temperatur im Koaxialrohr an. Ein technisches Hilfsmittel, wie z.B. ein Kompressor oder ein Verdichter, welche den wirtschaftlichen Ertrag minimieren würden, ist für die Temperatur- und Drucksteigerung nicht erforderlich.
- Wird nun eine Absperreinheit des Koaxialrohres geöffnet, steigt das gasförmige Wärmemedium durch den Kamineffekt in dem Innenrohr auf. Der Kamineffekt dieser entsteht durch eine Temperaturdifferenz zwischen der Temperatur des gasförmigen Wärmemediums im Endabschnitt des Koaxialrohres und am höchsten Punkt des Innenrohres in dem das gasförmige Wärmemedium strömt. So strömt das gasförmige Wärmemedium mit einer hohen Geschwindigkeit in dem Innenrohr aufwärts.
- Für eine höhere Temperaturdifferenz und damit eine Steigerung des Kamineffekts kann eine Aufweitung des Rohrdurchmessers am des Innenrohrs am oberen Ende (dem Kopf) des Koaxialrohrs genutzt werden. Auch kann ein in einem obersten Abschnitt, z.B. den obersten 50m, des Innenrohrs nicht gegebene thermische Isolierung dazu beitragen, indem dort das noch kalte flüssige Wärmemedium mit zur Abkühlung des dort vorbeiströmenden gasförmigen Wärmemediums beitragen kann.
- Die hohe kinetische Energie des gasförmigen Wärmemediums wird in einer Strömungsturbine (die z.B. ähnlich einer Windturbine sein kann) in Rotationsenergie umgewandelt und zum Antreiben eines elektrischen Generators genutzt. Diese Turbine kann auf Grund der hohen kinetischen Energie des gasförmigen Wärmemediums kleiner und kompakter gebaut werden, als dies mit einer Dampfturbine oder einer Aufwindturbine möglich und wirtschaftlich sinnvoll wäre.
- Die Wärmeenergie im gasförmigen Wärmemedium kann zusätzlich mittels Wärmeübertrager zur Wärmeversorgung oder als Produktionswärme genutzt werden.
- Die geothermale Wärmeenergie wird in diesem neuen Verfahren lediglich als Auslöser eines Phasenwechsels eines Wärmemediums eingesetzt.
- Zur Energieerzeugung (Elektro- und/oder Wärmeenergie) wird die hohe kinetische Energie des gasförmigen Wärmemediums, die durch die Reibungswärme, die geothermische Energie, den Phasenwechsel mit der Verdampfungswärme, die Temperatur- und Drucksteigerung sowie den Kamineffekt entsteht, genutzt.
- Das neue Verfahren erfolgt vorzugsweise in einem geschlossenen Kreislauf, so dass kein Wärmemedium ins Erdreich eingebracht werden muss und auch keine Umweltgefährdung oder Grundwasserverschmutzung eintreten kann.
- Es reichen bereits niedrige Thermaltemperaturen, entsprechend eines niedrigen Siedepunktes des Wärmemediums, aus, die mit bekannten geothermischen Verfahren weder für die Wärmeenergieversorgung noch für die Elektroenergieherstellung direkt nutzbar sind.
- Wesentlichen Einfluss nehmen auch die Dichte des Wärmemediums sowie der Höhenunterschied zwischen tiefstem Punkt des Koaxialrohres und dem höchsten Punkt der Rohrleitung in dem das gasförmige Wärmemedium strömt.
- Ein niedriger Siedepunkt des Wärmemediums führt zu geringeren Bohrtiefen. Dadurch wird auch die Verwendung des Verfahrens in sehr vielen Gebieten wirtschaftlich sehr interessant, in denen bisher Geothermie wegen der erforderlichen Bohrtiefen unwirtschaftlich war.
- Durch die Realisierung des neuen Verfahrens ist es möglich, z.B. mit der so gewonnenen elektrischen Energie an Land sowie auf den Meeren Elektroladestationen für LKW, Busse, PKW, Schiffe, Ausflugsboote, Fähren zu betreiben und so einen erheblichen Beitrag zur Verringerung des CO₂-Ausstosses zu leisten.
- Die Standorte sind sehr flexibel auswählbar, da das erfindungsgemäße Verfahren keine besonderen Standortanforderungen stellt, wie etwa das Vorhandensein von Thermalquellen, wasserführenden oder -durchlässigen Schichten/Gesteinen oder hohen Temperaturen in niedriger Tiefe.

### Bezugszeichen

- 1: Koaxialrohr
- 2: Außenrohr
- 3: Innenrohr
- 4: Endabschnitt
- 5: Leitblech
- 6: Aufweitung
- 7: Entgasungs- und Vorratsbehälter
- 8: Wärmemedium
- 9: Leitung
- 10: Pumpe
- 11: Einlass
- 12: Ventil
- 13: Leitung
- 14: Strömungsgenerator
- 15: Strömungsturbine
- 16: Generator
- 17: Ventil
- 18: Leitung
- 19: Wärmeübertrage
- 20: Leitung
- 21: Kurzschlussleitung
- 22: Kurzschlussleitung
- 23: Installationsgebäude

## Patentansprüche

1. Verfahren zur Gewinnung von Nutzenergie aus Erdwärme, wobei in einem in eine Tiefbohrung in die Erde eingebrachtes, ein Außenrohr (2) und ein Innenrohr (3) aufweisendes Koaxialrohr (3), bei dem in einem in der Tiefbohrung versenkten Endabschnitt (4) des Koaxialrohrs (1) Außenrohr (2) und Innenrohr (3) eine Verbindung miteinander aufweisen, ein bei Standardbedingungen flüssiges Wärmemedium (8) in das Außenrohr (2) eingebracht wird und in Richtung des in der Tiefbohrung versenkten Endabschnitts (4) des Koaxialrohrs (1) strömt, wobei das Wärmemedium (8) unter Aufnahme von Erdwärme erwärmt wird und im Bereich des Endabschnitts (4) einen Phasenübergang durchläuft und gasförmig in das Innenrohr (3) übertritt und darin bis zu einem an der Erdoberfläche gelegenen, oberen Ende des Koaxialrohrs aufwärts strömt, und wobei mit dem strömenden, gasförmigen Wärmemedium (8) ein Strömungsgenerator (14) zur Erzeugung elektrischer Energie betrieben wird.

2. Verfahren nach Anspruch 1, **dadurch gekennzeichnet, dass** das Wärmemedium (8) nach dem Durchströmen des Strömungsgenerators (14) durch einen Wärmeübertrager (18) geführt wird zur Gewinnung von nutzbarer Wärmeenergie.

3. Verfahren nach einem der vorhergehenden Ansprüche, **dadurch gekennzeichnet, dass** das Wärmemedium (8) nach dem Durchströmen des Strömungsgenerators (14) verflüssigt und in flüssiger Form erneut in das Außenrohr (2) des Koaxialrohrs (3) eingebracht wird.

4. Verfahren nach einem der vorhergehenden Ansprüche, **dadurch gekennzeichnet, dass** das Wärmemedium (8) in dem Außenrohr (2) auf einer spiralförmigen Bahn in Richtung des in der Tiefbohrung versenkten Endabschnitts geführt wird.

5. Verfahren nach einem der vorhergehenden Ansprüche, **dadurch gekennzeichnet, dass** es auch das Vortreiben einer Tiefbohrung in die Erde und das Einbringen des Koaxialrohrs (1) in die Tiefbohrung umfasst.

6. Verfahren nach Anspruch 5, **dadurch gekennzeichnet, dass** die Tiefbohrung in eine Tiefe von wenigstens 1000 m eingebracht wird.

7. Verfahren nach einem der Ansprüche 5 oder 6, **dadurch gekennzeichnet, dass** die Tiefbohrung in eine Tiefe von höchstens 2500 m eingebracht wird.

8. Verfahren nach einem der vorhergehenden Ansprüche, **dadurch gekennzeichnet, dass** als Wärmemedium (8) Dodecafluor-2-methylpentan-3-1 verwendet wird.

9. Einrichtung zur Gewinnung von Nutzenergie aus Erdwärme mit
• einem in eine Tiefbohrung eingebrachten Koaxialrohr (1), wobei das Koaxialrohr (1) ein Außenrohr (2) und ein Innenrohr (3) aufweist und wobei in einem in der Tiefbohrung versenkten Endabschnitt (4) des Koaxialrohrs (1) Außenrohr (2) und Innenrohr (3) eine Verbindung miteinander aufweisen;
• in dem Außenrohr (2) angeordnete, dessen Querschnitt durchragende Leitstrukturen (5), insbesondere Spiralleitbleche;
• einer mit einer an einem dem Endabschnitt axial gegenüberliegenden Ende des Koaxialrohrs (1) vorgesehenen Eintrittsöffnung (11) des Außenrohrs (2) verbundenen Zuleitung (9);
• einem mit einer an dem Ende des Koaxialrohrs (1) vorgesehenen Austrittsöffnung des Innenrohrs (3) verbundenen Gasströmungskanal (13);
• einem in dem Gasströmungskanal (13) angeordneten Strömungsgenerator (14) zum Erzeugen von elektrischer Energie; und
• einem zum Durchströmen des Koaxialrohrs (1) angeordneten Wärmemedium (8), welches bei Standardbedingungen flüssig ist und einen Siedepunkt bei Normaldruck von zwischen 30°C und 60°C aufweist.

10. Einrichtung nach Anspruch 9, **gekennzeichnet, durch** einen an dem Ende des Koaxialrohrs (1) angeordneten Abschnitt (6) des Innenrohrs (3), in dem ein Durchmesser des Innenrohrs (3) ausgehend von einem ersten Durchmesser, den das Innenrohr (3) entlang seiner Erstreckung bis zu dem Endabschnitt (4) aufweist, bis auf einen zweiten Durchmesser, den die Austrittsöffnung aufweist, erweitert ist.

11. Einrichtung nach einem der Ansprüche 9 oder 10, **gekennzeichnet durch** einen auf einer dem die Austrittsöffnung mit dem Strömungsgenerator (14) verbindenden Gasströmungskanal (13) entgegengesetzten Seite des Strömungsgenerators (14) angeordneten und mit dem Strömungsgenerator (14) mit einer Strömungsleitung (18) verbundenen Wärmeübertrager (19) zum Gewinnen von nutzbarer Wärmeenergie.

12. Einrichtung nach einem der Ansprüche 9 bis 11, **dadurch gekennzeichnet, dass** die Austrittsöffnung und die Eintrittsöffnung (11) in einem geschlossenen Leitungssystem miteinander verbunden sind.

13. Einrichtung nach Anspruch 12, **gekennzeichnet durch** einen in dem geschlossenen Leitungssystem angeordneten Entgasungs- und Vorratsbehälter (7).

14. Einrichtung nach einem der Ansprüche 9 bis 13, **gekennzeichnet durch** ein oder mehrere Ventile (10, 17) in der Zuleitung (9) und/oder dem Gasströmungskanal (13) zum gezielten Öffnen und/oder Verschließen der Zuleitung (9) und/oder des Gasströmungskanals (13) und durch eine, insbesondere mit Sensoren zur Bestimmung von Kenngrößen des in der Zuleitung (9) und/oder dem Gasströmungskanal (13) befindlichen Wärmemediums (8) verbundenen, Steuerung zum automatischen Betätigen des wenigstens einen Ventils.

15. Einrichtung nach einem der Ansprüche 9 bis 14, **gekennzeichnet durch** Dodecafluor-2-methylpentan-3-1 als Wärmemedium (8).
